# EUROPEAN PATENT SPECIFICATION

(11) **EP 3 417 710 B1**
(45) Date of publication and mention of the grant of the patent: **23.02.2022**
(21) Application number: 17752581.3
(22) Date of filing: 15.02.2017
(51) Int. Cl.: A01N 53/00, C09D 5/14, A01N 65/00, A01N 65/26, A01N 65/44, A01P 17/00

(54) **INSECT-REPELLENT FORMULATION FOR THE PROTECTION OF SURFACES**
INSEKTENABWEISENDE FORMULIERUNG ZUM SCHUTZ VON OBERFLÄCHEN
FORMULATION À ACTION RÉPULSIVE CONTRE LES INSECTES POUR LA PROTECTION DE SURFACES

(30) Priority: 18.02.2016 BR 102016033977
(43) Date of publication of application: 26.12.2018
(73) Proprietor: Ipel Itibanyl Produtos Especiais Ltda., 13240-000 Jarinu - SP (BR)
(72) Inventor: PINTO, Walter Piccirillo, 12941-000 Atibaia (BR); CARITÁ JÚNIOR, Giovanni, 12945-530 Atibaia (BR)
(74) Representative: Balder IP Law, S.L.
(86) International application number: PCT/BR2017/050033
(87) International publication number: WO 2017/139862

(56) References cited:
- EP-A2- 1 112 687
- WO-A1-99/41983
- WO-A2-2009/033237
- CN-A- 104 920 519
- KR-A- 20010 028 567
- KR-A- 20130 076 116
- US-A- 4 923 698
- US-A1- 2008 132 583
- US-A1- 2013 273 129
- US-A1- 2014 335 140
- Anonymous: "Permethrin (EHC 94, 1990)", , 1 January 1990 (1990-01-01), XP055594245, Retrieved from the Internet: URL:http://www.inchem.org/documents/ehc/eh c/ehc94.htm [retrieved on 2019-06-05]
- Anonymous: "Cypermethrin (HSG 22, 1989)", , 1 January 1989 (1989-01-01), XP055596085, Retrieved from the Internet: URL:http://www.inchem.org/documents/hsg/hs g/hsg022.htm [retrieved on 2019-06-13]

## Description

### FIELD OF APPLICATION

This invention provides a formulation used as surface coating with repellent action against flying and crawling insects, combining synthetic active ingredients, additives, solvents, stabilizer and surfactants, in which said formulation may be included to products such as water-based and solvent-based coating compositions, wood laminate products, wallpapers and others.

"Most febrile illnesses on humans are caused by microorganisms transmitted by insects", says the Encyclopedia Britannica. The term "insect" indicates not only insects as such - six-legged animals, such as flies, fleas, mosquitoes, head lice and beetles - but also eight-legged creatures, such as mite and ticks. According to scientific classification, all said species fall into the most comprehensive category of arthropods - the largest division in the animal kingdom - including at least a million known species.

Most insects are harmless to humans, and some are quite useful, such as pollinators, and others that help in decomposing waste, among other functions. A large number of insects feed exclusively on plants, whereas some feed on other insects. Obviously, there are insects that are bothersome to humans, have painful stings or are simply numerous. Some may also cause damage to crops, and others may cause diseases and even death.

Insect transmitted diseases "have cause more deaths from the 17^{th} century up to the beginning of the 20^{th} century than all other causes of death combined", says Duane Gubler, from the Centers for Disease Control and Prevention of the United States.

Nowadays, about 1 out of 6 people is infected with an insect transmitted disease. Aside from the affliction, these diseases represent a large financial burden, particularly in developing countries, which are precisely those with the least resources. Even a single outbreak can be hugely costly. An epidemic at western India, in 1994, cost billions of dollars to local and world economy.

Insects may act as vectors - in other words, disease transmitting agents - in two particular forms, as follows:
- Mechanical transmission: Similarly, as people bring dirt from their shoes to their homes, houseflies may carry millions of microorganisms on their legs, which, depending on quantity, may cause diseases. Flies that landed on feces, for example, contaminate food and drink;
- Vectors: the transmission takes place when insects hosting viruses, bacteria or parasites infect victims by stinging or other means. Only a minor percentage of insects transmit diseases to humans in that manner. For example, although there are millions of different species of mosquitoes, only the *Anopheles* genus are able to transmit malaria - the second most deadly infectious disease in the world, after tuberculosis.

Some scientists foresee that the global warming will enable disease-transmitting insects to breed in currently colder environments. As it seems, this is already taking place. Dr. Paul R. Epstein, from the Center for Health and Global Environment of Harvard University, says: "Currently there are reports of incidence of insects and insect transmitted diseases (including malaria and dengue fever) in higher regions of Africa, Asia and Latin America." In Costa Rica, dengue fever has surpassed the mountainous barriers, which, not long ago, restricted the illness to the Pacific Coast, and now the entire country is affected.

In face of the aforementioned scenario, insect repellent coating materials may contribute in insect control and become an additional tool in fighting diseases and improving the quality of life for people. Furthermore, such functionality in a coating material is a differential feature, which aggregates value and technology to the product.

### STATE OF THE ART

Various studies have been performed for insect repellent compositions, in order to achieve an effective product, harmless to humans and to the environment. An insect repellent composition for surfaces is described in document US 2015/0201615. This invention differs from US patent 2015/0201615 regarding the types of active ingredients and vehicles used. Moreover, this invention focuses on application to surfaces such as paint, laminate flooring and wallpapers, which differs from the application of the product mentioned in the North American patent, thus has relevant inventive step to the proposed application. The active ingredients selected in the object of this patent provide good compatibility and chemical stability for the proposed applications.

### BRIEF DESCRIPTION OF THE DRAWINGS

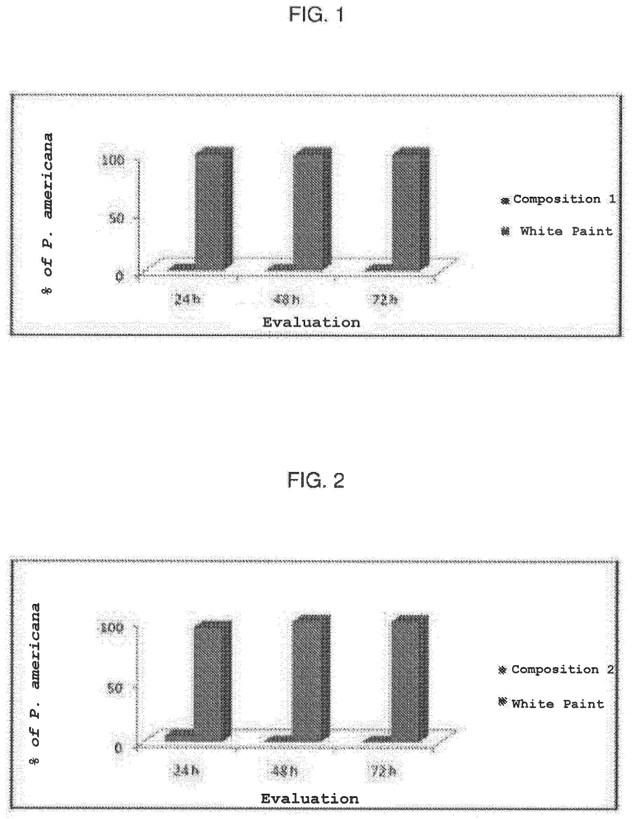

Figure 1 shows a chart with repellency results and performance at time 0 against *Periplaneta Americana* (house roach) using composition 1.
Figure 2 shows a chart with repellency results and performance at time 0 against *Periplaneta Americana* (house roach) using composition 2.

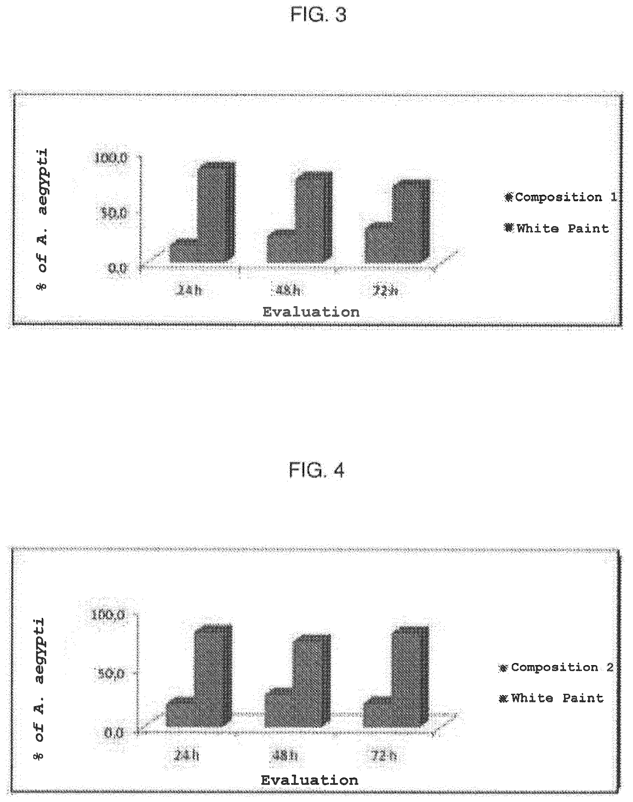

Figure 3 shows a chart with repellency results and performance at time 0 against *Aedes aegypti* using composition 1.
Figure 4 shows a chart with repellency results and performance at time 0 against *Aedes aegypti* using composition 2.

### DETAILED DESCRIPTION OF THE INVENTION

Some natural active ingredients, which also include insect repellent properties, were also evaluated. Some examples include the Neem oil, Eucalyptus oil, lemongrass (essential oils), among others.

Afterwards, drawing on some of the work already performed, formulations including said active ingredients and formulations including synthetic active ingredients such as pyrethrin and pyrethroid byproducts were prepared, which will be described in detail in the following examples, and water-based coating compatibility and stability evaluation work was launched (acrylic paint and PVA latex).

After the stability and compatibility test phase, paint samples were prepared and submitted to lab testing for proof of efficiency of the additive.

According to ANVISA *[Brazilian Health Surveillance Agency],* repellents are "products with repellent action against insects, for application to immovable surfaces and volatilization in environments with slow and continuous release of the active ingredient(s) by electric heating or other energy form, or even spontaneously", and the concept of insect repellency is different from insecticide action, as it does not kill the insect, but rather discourages the insect from landing or pushes it away from a certain surface.

There are various types of repellents available in the market directed at skin application or room protection, in which the release of the active ingredient is done by heating (repellent tablets or solutions that are released by electric devices) or even by burning as candles or coil repellents. For instance, KR20010028567A discloses the use of permethrin as insect repellent for e.g. plywood, wall paper etc. and compositions containing permethrin along with i.a. sodium dodecylbenzenesulphonate and propylene glycol.

The development described herein features the compatibility of repellent active ingredients through formulations including additives, solvents, stabilizers and surfactants as innovation, enabling inclusion in products such as:
- water-based (acrylic, latex, styrene-acrylic, epoxy, alkyd, among others) and solvent-based (acrylic, epoxy, alkyd, among others) coating compositions;
- wood laminate products that include resin in their compositions, which may be used in producing furniture, tools, base trims, ceiling trims, etc.;
- surface coating paper, such as wallpapers;
in order to provide rooms less susceptible to insect dwelling and development, contributing to the quality of life of users of said rooms or environments.

The composition according to the present invention example 1:

### EXAMPLES AND RESULTS

### EXAMPLE 1 - ADDITIVE FORMULATION WITH REPELLENT ACTION, SYNTHETIC BASE

Repellent additive composition, named composition 1, including:

| Compound | % weight | Addition order |
|---|---|---|
| Permethrin / Cypermethrin | 45.0 - 60.0 | 5 |
| Glycol (propylene glycol / dipropylene glycol) | 8.0 - 12.0 | 1 |
| Hydrogenated Castor Oil 40 EO | 10.0 - 15.0 | 4 |
| Ethoxylate / Propoxylate Alcohol | 4.0 - 7.0 | 3 |
| Calcium dodecylbenzenesulfonate and/or Polyethylene-polypropylene monobutyl glycol ether | 15.0 - 20.0 | 2 |

Stability and compatibility test results for water-based coatings (vinyl-acrylic resin) with Composition 1 at 1.00 and 1.50% dosages are as follows.

Methodology:
- Use of additives on PAINT 1 VINYL and PAINT 2 VINYL samples, with 1.00% and 1.50% dosages of the repellent additive composition 1;
- Advanced stability testing in oven at 45°C for 14 days;
- Daily color and odor monitoring of the samples in humid state;
- pH measurement at the start and end of the stability period.

### RESULTS:

### A - SAMPLE: WATER-BASED VINYL PAINT

| (Ref.: RAM 1262/13) | | |
|---|---|---|
| Sample: Vinyl 1 | | |
| Additives: | Color | Odor |
| Paint as such | WHITE (10% pH at 9.38 water) | CHARACTERISTIC |
| 1.00% Composition 1 | WHITE | CHARACTERISTIC |
| Day 2 | WHITE | CHARACTERISTIC |
| Day 3 | WHITE | CHARACTERISTIC |
| Day 4 | WHITE | CHARACTERISTIC |
| Day 5 | WHITE | CHARACTERISTIC |
| Day 6 | WHITE | CHARACTERISTIC |
| Day 7 | WHITE | CHARACTERISTIC |
| Day 8 | WHITE | CHARACTERISTIC |
| Day 9 | WHITE | CHARACTERISTIC |
| Day 10 | WHITE | CHARACTERISTIC |
| Day 11 | WHITE | CHARACTERISTIC |
| Day 12 | WHITE | CHARACTERISTIC |
| Day 13 | WHITE | CHARACTERISTIC |
| Day 14 | WHITE | CHARACTERISTIC |
| pH (10% solution in water) | | Initial: 9.34 |
| | | Final: 9.31 |

| Additives: | Color | Odor |
|---|---|---|
| 1.50% Composition 1 | WHITE | CHARACTERISTIC |
| Day 2 | WHITE | CHARACTERISTIC |
| Day 3 | WHITE | CHARACTERISTIC |
| Day 4 | WHITE | CHARACTERISTIC |
| Day 5 | WHITE | CHARACTERISTIC |
| Day 6 | WHITE | CHARACTERISTIC |
| Day 7 | WHITE | CHARACTERISTIC |
| Day 8 | WHITE | CHARACTERISTIC |
| Day 9 | WHITE | CHARACTERISTIC |
| Day 10 | WHITE | CHARACTERISTIC |
| Day 11 | WHITE | CHARACTERISTIC |
| Day 12 | WHITE | CHARACTERISTIC |
| Day 13 | WHITE | CHARACTERISTIC |
| Day 14 | WHITE | CHARACTERISTIC |
| pII (10% solution in water) | | Initial: 9.34 |
| | | Final: 9.34 |

Samples were kept in oven after 14 days of stability. Also, a film extension test was carried out, with no changes observed regarding aspect of the dry film.

### EXAMPLE 2 - ADDITIVE FORMULATION WITH SYNTHETIC-BASED REPELLENT ACTION ADDITIVE BOOSTED WITH NATURAL ADDITIVES (not within the claimed scope)

The incorporation of natural additives, aside from bolstering the additive action, increasing its action spectrum, provides a more sustainable product from the viewpoint of availability of plant-derived raw materials such lemongrass, Neem oil, among others.

Below is the description of a repellent additive composition, called composition 2, which comprises:

| Compound | % weight | Addition order |
|---|---|---|
| Permethrin / Cypermethrin | 40.0 - 50.0 | 5 |
| Glycol (propylene glycol / dipropylene glycol) | 8.0 - 12.0 | 1 |
| Essential Lemongrass oil | 10.0 - 12.0 | 6 |
| Hydrogenated Castor Oil 40 EO | 10.0 - 15.0 | 4 |
| Ethoxylate / Propoxylate Alcohol | 3.0 - 6.0 | 3 |
| Calcium dodecylbenzenesulfonate and/or Polyethylene-polypropylene monobutyl glycol ether | 12.0 - 17.0 | 2 |

Stability and compatibility test results for water-based coatings (vinyl-acrylic resin) with Composition 2 at 1.00 and 1.50% dosages are as follows.<0}

| Additives: | Color | Odor |
|---|---|---|
| 1.00% Composition 2 | WHITE | REPELLENT ADDITIVE SLIGHT ODOR |
| Day 2 | WHITE | REPELLENT ADDITIVE ODOR |
| Day 3 | WHITE | REPELLENT ADDITIVE ODOR |
| Day 4 | WHITE | REPELLENT ADDITIVE ODOR |
| Day 5 | WHITE | REPELLENT ADDITIVE ODOR |
| Day 6 | WHITE | REPELLENT ADDITIVE SLIGHT ODOR |
| Day 7 | WHITE | REPELLENT ADDITIVE |
| | | SLIGHT ODOR |
| Day 8 | WHITE | REPELLENT ADDITIVE SLIGHT ODOR |
| Day 9 | WHITE | REPELLENT ADDITIVE SLIGHT ODOR |
| Day 10 | WHITE | REPELLENT ADDITIVE SLIGHT ODOR |
| Day 11 | WHITE | REPELLENT ADDITIVE SLIGHT ODOR |
| Day 12 | WHITE | REPELLENT ADDITIVE SLIGHT ODOR |
| Day 13 | WHITE | REPELLENT ADDITIVE SLIGHT ODOR |
| Day 14 | WHITE | REPELLENT ADDITIVE SLIGHT ODOR |
| pH (10% solution in water) | | Initial: 8.78 |
| | | Final: 9.02 |

| Additives: | Color | Odor |
|---|---|---|
| 1.50% Composition 2 | WHITE | REPELLENT ADDITIVE SLIGHT ODOR |
| Day 2 | WHITE | REPELLENT ADDITIVE ODOR |
| Day 3 | WHITE | REPELLENT ADDITIVE ODOR |
| Day 4 | WHITE | REPELLENT ADDITIVE ODOR |
| Day 5 | WHITE | REPELLENT ADDITIVE ODOR |
| Day 6 | WHITE | REPELLENT ADDITIVE ODOR |
| Day 7 | WHITE | REPELLENT ADDITIVE ODOR |
| Day 8 | WHITE | REPELLENT ADDITIVE ODOR |
| Day 9 | WHITE | REPELLENT ADDITIVE ODOR |
| Day 10 | WHITE | REPELLENT ADDITIVE ODOR |
| Day 11 | WHITE | REPELLENT ADDITIVE ODOR |
| Day 12 | WHITE | REPELLENT ADDITIVE ODOR |
| Day 13 | WHITE | REPELLENT ADDITIVE ODOR |
| Day 14 | WHITE | REPELLENT ADDITIVE ODOR |
| pH (10% solution in water) | | Initial: 8.73 |
| | | Final: 8.91 |

Samples were kept in oven after 14 days of stability. Also, a film extension test was carried out, with no changes observed regarding aspect of the dry film.

After the film dried, odor was no longer noticeable, allowing application of the coating without restrictions.

## Claims

1. Formulation of synthetic repellent additive, wherein it comprises 45.0 to 60.0% weight of active ingredients permethrin and/or cypermethrin, 8.0 to 12.0% weight of propylene glycol and/or dipropylene glycol; 10.0 to 15.0% weight of hydrogenated castor oil 40 EO; 4.0 to 7.0% weight of propoxylate alcohol and/or ethoxylate alcohol; and 15.0 to 20.0% weight of calcium dodecylbenzenesulfonate and/or polyethylene-polypropylene monobutyl glycol ether.

2. Coating compositions comprising formulation of synthetic repellent additive as defined in claim 1, wherein the coating compositions are water-based coating compositions or solvent-based coating compositions, wherein the water-based coating compositions are selected from the group consisting of acrylic, latex, styrene-acrylic, epoxy and alkyd coating compositions, wherein the solvent-based coating compositions are selected from acrylic, epoxy and alkyd coating compositions.

3. Wood laminate products comprising formulation of synthetic repellent additive as defined in claim 1 and resin, wherein the wood laminate products are used in producing furniture, tools, base trims or ceiling trims.

4. Surface coating papers comprising formulation of synthetic repellent additive as defined in claim 1.

5. The surface coating papers according to claim 4, wherein the surface coating papers are wallpapers.

## Patentansprüche

1. Formulierung von synthetischem abweisendem Zusatz (Repellent-Zusatz), die 45,0 bis 60,0 Gew.% der aktiven Bestandteile Permethrin und/oder Cypermethrin, 8,0 bis 12,0 Gew.% Propylenglykol und/oder Dipropylenglykol; 10,0 bis 15,0 Gew.% hydriertes Castoröl 40 EO; 4,0 bis 7,0 Gew.% Propoxylatalkohol und/oder Ethoxylatalkohol; und 15,0 bis 20,0 Gew.% Calciumdidecylbenzolsulfonat und/oder Polyethylen-Polypropylen-Monobutylglykolether umfasst.

2. Beschichtungszusammensetzungen, umfassend eine Formulierung von synthetischem Repellent-Zusatz wie in Anspruch 1 definiert, wobei die Beschichtungszusammensetzungen Beschichtungszusammensetzungen auf Wasserbasis oder Beschichtungszusammensetzungen auf Lösungsmittelbasis sind, wobei die Beschichtungszusammensetzungen auf Wasserbasis ausgewählt sind aus der Gruppe bestehend aus Acryl-, Latex-, Styrol-Acryl-, Epoxy- und Alkydbeschichtungszusammensetzungen, wobei die Beschichtungszusammensetzungen auf Lösungsmittelbasis ausgewählt sind aus Acryl-, Epoxy- und Alkydbeschichtungszusammensetzungen.

3. Holzlaminatprodukte, umfassend die Formulierung des synthetischen Repellent-Zusatzes wie in Anspruch 1 definiert sowie Harz, wobei die Holzlaminatprodukte zur Herstellung von Möbeln, Werkzeugen, Sockelleisten oder Deckenleisten verwendet werden.

4. Oberflächenbeschichtungspapiere, umfassend die Formulierung des synthetischen Repellent-Zusatzes wie in Anspruch 1 definiert.

5. Oberflächenbeschichtungspapiere nach Anspruch 4, wobei die Oberflächenbeschichtungspapiere Tapeten sind.

## Revendications

1. Formulation d'additif répulsif synthétique, qui comprend 45,0 à 60,0 % en poids des ingrédients actifs perméthrine et/ou cyperméthrine, 8,0 à 12,0 % en poids de propylèneglycol et/ou de dipropylèneglycol ; 10,0 à 15,0 % en poids d'huile de ricin hydrogénée 40 EO ; 4,0 à 7,0 % en poids d'alcool propoxylé et/ou d'alcool éthoxylé ; et 15,0 à 20,0 % en poids de dodécylbenzènesulfonate de calcium et/ou d'éther de monobutyl-glycol de polyéthylène-polypropylène.

2. Compositions de revêtement comprenant une formulation d'additif répulsif synthétique telle que définie dans la revendication 1, les compositions de revêtement étant des compositions de revêtement à base d'eau ou des compositions de revêtement à base de solvant, les compositions de revêtement à base d'eau étant choisies dans le groupe constitué par des compositions de revêtement d'acrylique, de latex, de styrène-acrylique, d'époxy et d'alkyde, les compositions de revêtement à base de solvant étant choisies parmi des compositions de revêtement d'acrylique, d'époxy et d'alkyde.

3. Produits stratifiés de bois comprenant une formulation d'additif répulsif synthétique telle que définie dans la revendication 1 et une résine, les produits stratifiés de bois étant utilisés dans la production de meubles, d'outils, des garnitures de base ou des garnitures de plafond.

4. Papiers de revêtement de surface comprenant une formulation d'additif répulsif synthétique telle que définie dans la revendication 1.

5. Papiers de revêtement de surface selon la revendication 4, les papiers de revêtement de surface étant des papiers peints.
